(19) Europäisches Patentamt
European Patent Office
Office européen des brevets

(11) **EP 2 294 686 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **09768864.2**

(22) Anmeldetag: **26.03.2009**

(51) Int Cl.:
***H02M 7/5387*** *(2007.01)*   ***H02M 3/157*** *(2006.01)*

(86) Internationale Anmeldenummer:
**PCT/EP2009/002196**

(87) Internationale Veröffentlichungsnummer:
**WO 2009/156015 (30.12.2009 Gazette 2009/53)**

(54) **VERFAHREN UND VORRICHTUNG ZUM ERZEUGEN VON PWM-SIGNALEN**

METHOD AND DEVICE FOR GENERATING PWM SIGNALS

PROCÉDÉ ET DISPOSITIF POUR GÉNÉRER DES SIGNAUX MLI

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.06.2008 DE 102008030527**

(43) Veröffentlichungstag der Anmeldung:
**16.03.2011 Patentblatt 2011/11**

(73) Patentinhaber: **ETEL S. A..**
**2112 Môtiers (CH)**

(72) Erfinder: **FROIDEVAUX, Claude**
**CH-2300 La Chaux-de-Fonds (CH)**

(74) Vertreter: **Pleyer, Hans Anno et al**
**Dr. Johannes Heidenhain GmbH**
**Patentabteilung**
**Postfach 12 60**
**83292 Traunreut (DE)**

(56) Entgegenhaltungen:
**EP-A- 1 014 552     US-A1- 2006 227 860**

• **YAN-FEI LIU ET AL: "Digital control of switching power converters" CONTROL APPLICATIONS, 2005. CCA 2005. PROCEEDINGS OF 2005 IEEE CONFERE NCE ON TORONTO, CANADA AUG. 29-31, 2005, PISCATAWAY, NJ, USA,IEEE, 29. August 2005 (2005-08-29), Seiten 635-640, XP010835158 ISBN: 978-0-7803-9354-7**

**Beschreibung**

Die vorliegende Erfindung betrifft ein Verfahren und eine Vorrichtung zum Erzeugen von PWM-Signalen. Solche PWM-Signale dienen der Ansteuerung von Leistungstransistoren in einem Umrichter.

Ein Umrichter dient beispielsweise wie in der DE 10 2005 061 388 A1 beschrieben dazu, die Gleichspannung eines Zwischenkreises in einen dreiphasigen Wechselstrom zur Ansteuerung eines Elektromotors mit drei Motorphasen umzuwandeln.

Ganz allgemein soll ein Umrichter mittels der PWM-Signale eine vorgegebene Spannung in einer Motorphase möglichst genau einstellen siehe EP 1 014 552 A1. Dabei ist es natürlich von Vorteil, wenn die Spannung sehr fein vorgeben werden kann. In einem digitalen Umrichter bedeutet das aber, dass Digitalzähler mit sehr hohen Taktfrequenzen betrieben werden müssen, was mitunter zu schaltungstechnischen Problemen oder zumindest zu einem hohen schaltungstechnischen Aufwand führt.

Aufgabe der Erfindung ist es, eine Verfahren und eine Vorrichtung zum Erzeugen von PWM-Signalen anzugeben, die es unter Einsatz erschwinglicher digitaler Schaltkreise ermöglichen, die Spannung sehr fein vorzugeben, ohne dabei besonders hohe Taktfrequenzen des Digitalzähler zu erfordern.

Diese Aufgabe wird gelöst durch ein Verfahren nach Anspruch 1 und eine Vorrichtung gemäß dem unabhängigen Vorrichtungsanspruch. Vorteilhafte Details ergeben sich aus den abhängigen Ansprüchen.

Es wird ein PWM-Signal zum Ansteuern der Leistungstransistoren einer Halbbrücke eines Umrichters mittels einer digitalen Schaltung erzeugt, in der ein interner Referenzwert mit einem Zählerstand einer Zählrampe verglichen wird. Dabei hängt ein logischer Zustand des PWM-Signals davon ab, ob der interne Referenzwert größer als der Zählerstand der Zählrampe ist. Gemäß der Erfindung wird nach jedem Vergleich zwischen dem internen Referenzwert und dem Zählerstand ein vom Ergebnis dieses Vergleichs abhängiges, n Bit breites Datenwort seriell als PWM-Signal ausgegeben, wobei n größer oder gleich 2 ist.

Durch das Erzeugen und serielle Ausgeben des passend gebildeten Datenwortes lässt sich die Auflösung des PWM-Signals bei gegebenem Wertebereich und Zählertakt der Zählrampe etwa um den Faktor n steigern, ohne dass die schaltungstechnischen Anforderungen erheblich steigen würden. Umwandler zum schnellen, an einen langsameren Takt gekoppelten seriellen Ausgeben von Datenwörtern sind nämlich als Standardbausteine günstig erhältlich.

Weitere Vorteile sowie Einzelheiten der vorliegenden Erfindung ergeben sich aus der nachfolgenden Beschreibung einer bevorzugten Ausführungsform anhand der Figuren. Dabei zeigt

Figur 1     einen Umrichter gemäß dem Stand der Technik,

nik,

Figur 2     eine Dreiecksspannung und Steuerspannungen gemäß einem PWM-Verfahren nach dem Stand der Technik,

Figur 3     eine Zählrampe und ein Referenzwert gemäß einem digitalen PWM-Verfahren nach dem Stand der Technik,

Figur 4     eine Vorrichtung zum Erzeugen von PWM-Signalen,

Figur 5     ein Ablaufdiagram für ein Verfahren zum Erzeugen von PWM-Signalen,

Figur 6     eine Tabelle für die Auswahl geeigneter Datenwörter.

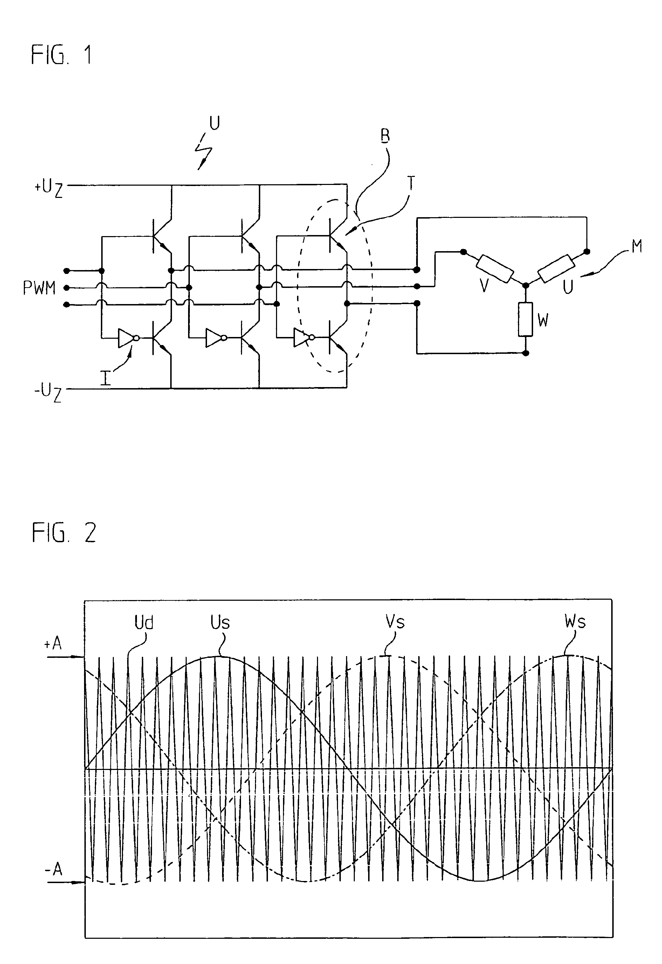

Die Figur 1 zeigt ein Prinzipschaltbild eines Umrichters U, wie er beispielsweise in der oben erwähnten DE 10 2005 061 388 A1 beschrieben ist. Mittels I lalbbrückenschaltungen B mit je zwei Leistungstransistoren T wird jede Motorphase U, V, W eines Elektromotors M entweder mit der positiven Zwischenkreisspannung +Uz oder mit der negativen Zwischenkreisspannung - Uz verbunden. Hierzu wird an jede Halbbrücke B aus zwei in Reihe geschalteten Leistungstransistoren T jeweils ein logisches PWM-Signal PWM angelegt, wobei jeweils ein Leistungstransistor direkt angesteuert wird, der andere über einen Inverter I. Dadurch liegt jede Motorphase je nach logischem Pegel des jeweiligen PWM-Signals entweder auf +Uz (logisch 1) oder auf -Uz (logisch 0). Zu beachten ist, dass beim Umschalten zwischen +Uz und -Uz eine kurze Totzeit eingehalten werden muss, während der beide Leistungstransistoren T einer Halbbrücke B nicht leitend sind, um einen Kurzschluss der Zwischenkreisspannung zu vermeiden.

In Figur 2 ist vereinfacht eine Möglichkeit zum Erzeugen von PWM-Signalen dargestellt. Bei den PWM-Signalen handelt es sich um pulsweitenmodulierte Rechtecksignale. Für jede Motorphase U, V, W wird eine Dreieckspannung Ud mit einer Steuerspannung Us, Vs, Ws verglichen. Liegt z.B. die Steuerspannung Vs über der Dreieckspannung Ud, so ist das PWM-Signal PWM für die Motorphase V logisch 1, und die Motorphase V wird mit der positiven Zwischenkreisspannung +Uz verbunden. Liegt die Steuerspannung unter der Dreieckspannung, so ist das zugehörige PWM-Signal logisch 0, und die zugehörige Motorphase wird mit der negativen Zwischenkreisspannung -Uz verbunden. Je höher also die Steuerspannung liegt, desto länger ist die jeweilige Motorphase mit +Uz verbunden, und umgekehrt. Über das Tastverhältnis des PWM-Signals wird so die mittlere Spannung eingestellt, die an der jeweiligen Motorphase anliegt.

Je höher die auch als PWM-Frequenz bezeichnete Frequenz der Dreieckspannung Ud liegt, desto besser kann die durch die Steuerspannung vorgegebene Spannung in der Motorphase mittels Pulsweitenmodulation eingestellt werden. Höhere PWM-Frequenzen bewirken ein schnelleres Erreichen der benötigten Motorströme, sowie eine Abnahme der Stromwelligkeit und damit verbunden eine Abnahme der Wirbelstromverluste.

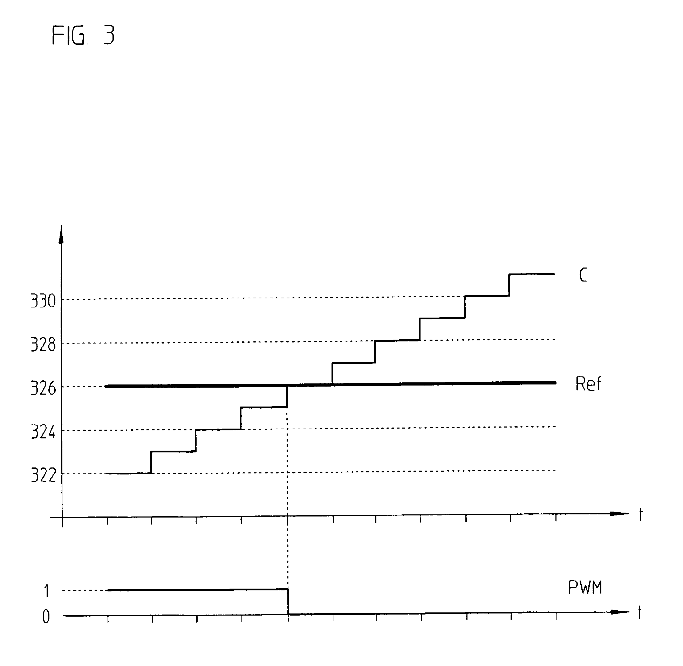

In digital angesteuerten Umnchtern wird wie in Figur 3 angedeutet das analoge Dreieckssignal der Figur 2 durch eine Zählrampe C ersetzt. Die Steuerspannung wird als variabler, digitaler Referenzwert Ref vorgegeben, wobei der Wertebereich des Referenzwertes in etwa mit dem Wertebereich der Zählrampe übereinstimmt, aber etwas kleiner ist. Im Beispiel der Figur 3 ist das PWM-Signal PWM eine logische "1", so lange der Referenzwert Ref kleiner ist als die Zählrampe C (oder genauer: als der Zählerstand der Zählrampe C), bzw. eine logische "0" sonst. Der logische Zustand des PWM-Signals PWM hängt also vom Vergleich des Referenzwertes Ref mit der Zählrampe C ab.

Von der Zählfrequenz und dem Wertebereich der Zählrampe C hängt nun die Qualität der erzeugt PWM-Signale PWM ab. Möchte man die Qualität steigern, benötig man Zähler mit einem größeren Wertebereich und damit eine höhere Zählfrequenz. Beide Maßnahmen erhöhen die Ansprüche an die verwendete Elektronik erheblich.

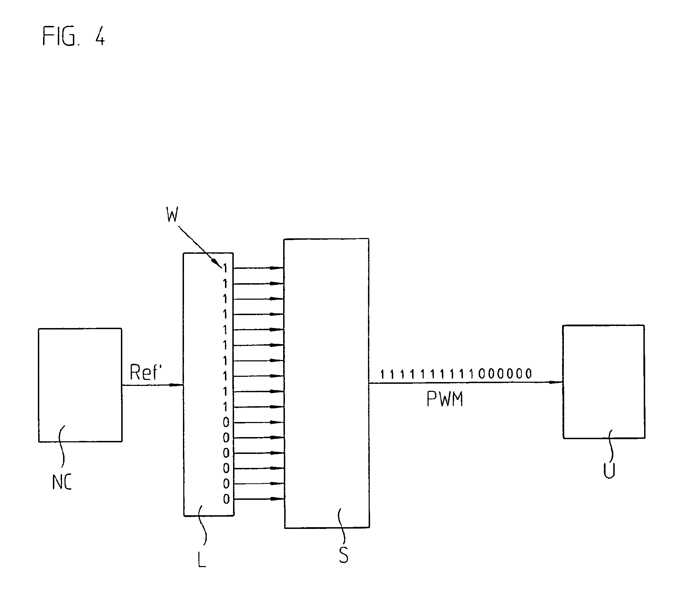

Die Figur 4 zeigt schematisch eine erfindungsgemäß verbesserte Vorrichtung zum Erzeugen von PWM-Signalen. Von einer Steuerung NC wird ein Referenzwert Ref' generiert, der dem Referenzwert Ref der Figur 3 entspricht, aber über einen größeren Wertebereich verfügt. Dieser Referenzwert Ref' wird in einer Logikschaltung L verarbeitet. Dabei wird ein Datenwort W erzeugt, das über einen Umwandler S seriell als PWM-Signal PWM an den Umrichter U ausgegeben wird.

Da die in der Logikschaltung L integrierte Zählrampe C trotz des größeren Wertebereichs des Referenzwertes Ref' der Steuerung NC nicht schneller zählen soll, bleibt Wertebereich der Zählrampe C unverändert und ist damit kleiner als der Wertebereich von Ref'.

Für den Vergleich mit der Zählrampe C wird dann nicht der Referenzwert Ref' von der Steuerung NC herangezogen, sondern der ganzzahlige Anteil einer Division des Referenzwerts Ref' durch eine ganze Zahl n:

$$Ref = int (Ref' / n);$$

wobei Ref der zum Vergleich mit der Zählrampe C herangezogene Referenzwert ist, Ref' der von der Steuerung NC gelieferte Referenzwert mit im Vergleich zu Ref n-fach größerem Wertebereich, und n einer ganzen Zahl größer oder gleich 2. Entsprechend könnte der von der Steuerung NC gelieferte Referenzwert Ref' auch als externer Referenzwert Ref' bezeichnet werden, und der daraus abgeleitete Referenzwert Ref als interner Referenzwert Ref.

Der Vergleich dieses so gebildeten internen Referenzwertes Ref mit dem Zählerstand einer Zählrampe C entscheidet letztlich über den logischen Zustand des PWM-Signals PWM. Als Ergebnis dieses Vergleichs wird aber nun das Datenwort W erzeugt, das eine Breite von n Bit aufweist. Dieses Datenwort W wird anschließend vom Umwandler S seriell als PWM-Signal ausgeben.

Solche Umwandler S sind beispielsweise als SERDES - Bausteine weit verbreitet. Sie benötigen lediglich einen langsamen externen Takt und können die schnelle serielle Ausgabe auf diesen langsamen Takt synchronisieren, etwa mittels einer üblichen PLL - Schaltung. Somit ist es möglich, das Datenwort W vollständig während eines Zähltaktes der Zählrampe C auszugeben, wenn der Umwandler S mit dem Takt der Zählrampe C synchronisiert wird. Ein Beispiel für einen zum Zeitpunkt der Anmeldung verfügbaren Baustein ist der DS90CR285 der Firma National Semiconductor. Im einfachsten Fall verfügt ein geeigneter Umwandler S über ein Schieberegister, das einmal pro Paralleltakt ein Datenwort W mit n Bits entgegen nimmt und dieses im n-fach schnelleren Serielltakt ausgibt.

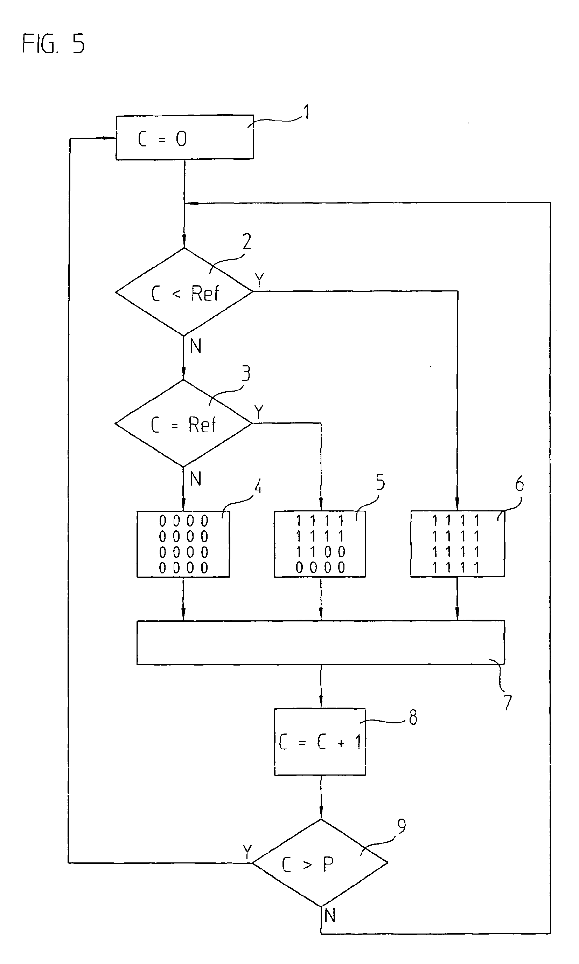

Die Figur 5 erläutert anhand eines Flussdiagramms die Funktionsweise der Logikschaltung L, in der das Datenwort W generiert wird.

Im Schritt 1 wird die Zählrampe C initialisiert, also z.B. auf 0 gesetzt.

Im Schritt 2 wird geprüft, ob die Zählrampe C (bzw. deren Zählerstand) kleiner als der interne Referenzwert Ref ist, der wie oben beschrieben aus dem von der Steuerung NC vorgegebenen externen Referenzwert Ref' abgeleitet ist. ist dies der Fall, wird in Schritt b ein Datenwort W erzeugt, dass nur aus logischen "1" besteht. Ist dies nicht der Fall, so wird zu Schritt 3 verzweigt.

in Schritt 3 wird überprüft, ob der Zählerstand der Zählrampe gerade genau dem internen Referenzwert Ref entspricht. Ist dies nicht der Fall, so wird im Schritt 4 ein Datenwort W erzeugt, dass nur aus logischen "0" besteht. Ist dies aber der Fall, so wird zu Schritt 5 verzweigt.

Im Schritt 5 wird ein Datenwort W erzeugt, das zum Teil aus logischen "1" und zum Teil aus logischen "0" besteht. Das Zustandekommen des Datenworts W im Schritt 5 sei im Folgenden noch näher erklärt.

Im Schritt 7 wird das Datenwort W über den Umwandler S seriell ausgegeben, wobei der Umwandler z.B. mittels einer PLL-Schaltung mit der Zählrampe C synchronisiert ist: Während jedem Zählschritt der Zählrampe C wird ein Datenwort W seriell ausgeben.

In Schritt 8 wird die Zählrampe inkrementiert, in Schritt 9 wird geprüft, ob der Endwert P der Zählrampe C bereits überschritten ist. Ist das noch nicht der Fall, so wird zu Schritt 2 verzweigt, andernfalls zu Schritt 1, in dem die Zählrampe auf den Ausgangswert zurückgesetzt wird.

Die Zählrampe C kann dabei wie hier beschrieben aufsteigend durchlaufen werden, aber auch absteigend, oder sogar abwechselnd aufsteigend und absteigend, was der Dreieckspannung im anhand der Figur 2 beschriebenen analogen Verfahren zur Erzeugen von PWM-Signalen am ehesten entspricht.

Es sei nun das Zustandekommen des Datenwortes W im Schritt 5 genauer erklärt. Wenn n die Breite des Datenwortes W ist (also n=16 im vorliegenden Beispiel), und die Zählrampe C von 0 bis P (im Bespiel sei P = 63) lauft, so wäre nach dem Stand der Technik ein externer Referenzwert zwischen 0 und 63 möglich (wobei Werte nahe der Grenzen aus technischen, hier nicht wichtigen Gründen ausgeschlossen sind). Gemäß der Erfindung sind nun hochauflösende externe Referenzwerte Ref' zwischen 0 und 1023 möglich. Dies verfeinert die Auflösung des PWM-Signals also um den Faktor n.

In den Schritten 2 und 3 wird wie oben erklärt nicht dieser von der Steuerung NC gelieferte hochauflösende externe Referenzwert Ref' betrachtet, sondern der ganzzahlige Anteil des Quotienten aus hochauflösendem externen Referenzwert Ref' und n, also ein erst in der Logikschaltung L gebildeter interner Referenzwert Ref. Lediglich in Schritt 5, also wenn dieser ganzzahlige Anteil bzw. interne Referenzwert Ref gleich dem Zählerstand der Zählrampe C ist, wird der Rest R der Division des hochauflösenden externen Referenzwerts Ref' durch n betrachtet. Für den Rest R gilt:

$$R = (Ref' / n) - int (Ref' / n)$$

und damit
$R = (Ref' / n) - Ref.$

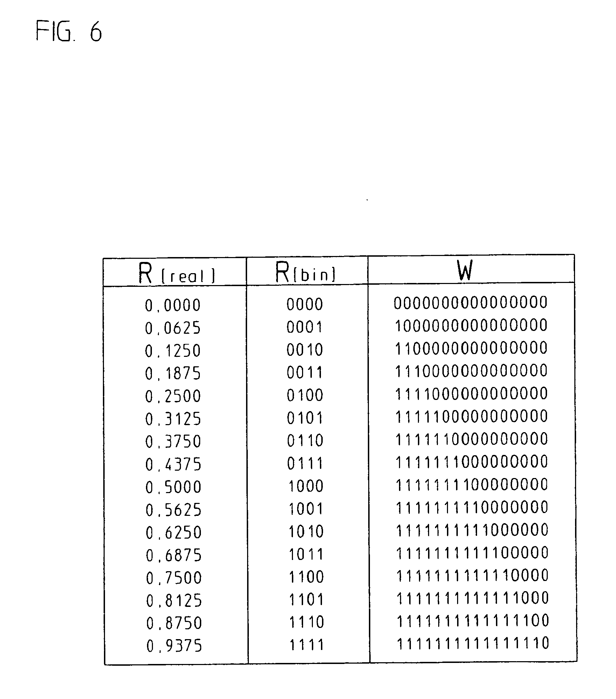

In Figur 6 sind in einer Tabelle die n = 16 möglichen Werte für diesen Rest R in dezimaler (R[real]) und binärer (R[bin]) Darstellung angegeben. In Schritt 5 wird also anhand des Restes R der Division des hochauflösenden externen Referenzwerts Ref' durch die Breite des Datenworts n ein Datenwort W ausgewählt. Je näher dieser Rest R bei Null liegt, desto weniger Bits vom logischen Zustand "1" enthält das Datenwort W.

Enthält das Datenwort Bits vom logischen Zustand "1", so müssen diese - bei wie in Figur 3 dargestellt aufsteigend durchlaufener Zählrampe C - zuerst seriell über den Umwandler S ausgegeben werden, sind also am Anfang des Datenwortes W angeordnet. Ebenso sind alle Bits vom logischen Zustand "0" am Ende des Datenwortes W angeordnet, wie man der Figur 6 entnehmen kann. Wird die Zählrampe C absteigend durchlaufen, so muss diese Reihenfolge jedoch umgekehrt werden.

Die erfindungsgemäße Vorrichtung zum Erzeugen von PWM-Signalen bewirkt also letztlich, dass in dem Bereich, in dem die Zählrampe C bis auf den Rest R mit dem intern gebildeten Referenzwert Ref übereinstimmt, die höhere Auflösung des von der Steuerung NC gelieferten externen Referenzwertes Ref' dazu verwendet wird, den Umschaltzeitpunkt des PWM-Signals genauer zu setzen als dies mit dem Takt der Zählrampe C möglich wäre.

Dies wird emöglicht durch die geeignete Auswahl des Datenwortes W, bei dem der Übergang von logisch "1" auf logisch "0" entsprechend dem Rest R festgelegt wird, sowie durch die schnelle, mit dem Zähltakt synchronisierte Ausgabe dieses Datenwortes W als PWM-Signal während eines Zähltaktes der Zählrampe C.

Mit einer Zählrampe, die mit gut beherrschbaren 100 MHz zählt, lässt sich für n = 16 mit dem erfindungsgemäßen Verfahren bzw. der erfindungsgemäßen Vorrichtung ein PWM-Signal erzeugen, dessen Auflösung mit einem Verfahren bzw. einer Vorrichtung nach dem Stand der Technik nur mit einer Zählfrequenz von 1.6 GHz zu erreichen wäre. Derart hohe Zählfrequenzen sind derzeit nur mit großem schaltungstechnischen Aufwand zu erreichen.

**Patentansprüche**

1. Verfahren zum Erzeugen eines PWM-Signals zum Ansteuern der Leistungstransistoren (T) einer Halbbrücke (B) eines Umrichters (U) mittels einer digitalen Schaltung (L, S), nach dem ein interner Referenzwert (Ref) mit einem Zählerstand einer Zählrampe (C) verglichen wird, wobei ein logischer Zustand des PWM-Signals (PWM) davon abhängt, ob der interne Referenzwert (Ref) größer als der Zählerstand der Zählrampe (C) ist, **dadurch gekennzeichnet, dass** nach jedem Vergleich zwischen dem internen Referenzwert (Ref) und dem Zählerstand ein vom Ergebnis dieses Vergleichs abhängiges, n Bit breites Datenwort (W) erzeugt und seriell als PWM-Signal (PWM) ausgegeben wird, wobei n größer oder gleich 2 ist, und wobei die serielle Ausgabe des Datenwortes (W) mit der Zählrampe (C) synchronisiert ist, so dass ein vollständiges Datenwort (W) während einem Takt der Zählrampe (C) ausgegeben wird.

2. Verfahren nach Anspruch 1, **dadurch gekennzeichnet, dass** das Datenwort (W) ausschließlich aus Bits eines ersten logischen Werts besteht, falls der Zählerstand kleiner als der interne Referenzwert (Ref) ist.

3. Verfahren nach Anspruch 1 oder 2, **dadurch gekennzeichnet, dass** das Datenwort (W) ausschließlich aus Bits eines zweiten logischen Werts besteht, falls der Zählerstand größer als der interne Referenzwert (Ref) ist.

4. Verfahren nach einem der vorhergehenden Ansprüche, **dadurch gekennzeichnet, dass** der interne Referenzwert (Ref) von einem externen Referenzwert (Ref) abgeleitet wird, wobei der Referenzwert (Ref) der ganzzahlige Anteil des Quotienten des externen Referenzwerts (Ref) und n ist.

**5.** Verfahren nach Anspruch 4, **dadurch gekennzeichnet, dass** bei Gleichheit des internen Referenzwerts (Ref) und der Zählrampe (C) ein Datenwort (W) seriell ausgegeben wird, dessen Anteile an Bits vom ersten und zweiten logischen Wert von einem Rest (R) der Division des externen Referenzwerts (Ref) durch n abhängig ist.

**6.** Verfahren nach Anspruch 5, **dadurch gekennzeichnet, dass** das Datenwort (W) umso mehr Bits des ersten logischen Werts enthält, desto größer der Rest (R) ist.

**7.** Verfahren nach Anspruch 4 oder 5, **dadurch gekennzeichnet, dass** zunächst alle Bits des ersten logischen Werts im Datenwort (W) seriell ausgegeben werden, und erst dann alle Bits des zweiten logischen Werts, falls die Zählrampe (C) aufsteigend durchlaufen wird.

**8.** Verfahren nach Anspruch 4 oder 5, **dadurch gekennzeichnet, dass** zunächst alle Bits des zweiten logischen Werts im Datenwort (W) seriell ausgegeben werden, und erst dann alle Bits des ersten logischen Werts, falls die Zählrampe (C) absteigend durchlaufen wird.

**9.** Vorrichtung zum Erzeugen eines PWM-Signals zum Ansteuern der Leistungstransistoren (T) einer Halbbrücke (B) eines Umrichters (U) mittels einer digitalen Schaltung (L, S), mit Mitteln zum Vergleichen eines internen Referenzwerts (Ref) mit einem Zählerstand einer Zählrampe (C), wobei ein logischer Zustand des PWM-Signals (PWM) davon abhängt, ob der interne Referenzwert (Ref) größer als der Zählerstand der Zählrampe (C) ist, **dadurch gekennzeichnet, dass** die Vorrichtung einen Umwandler (S) aufweist, der eingerichtet ist, um nach jedem Vergleich zwischen dem internen Referenzwert (Ref) und dem Zählerstand ein vom Ergebnis dieses Vergleichs abhängiges, n Bit breites Datenwort (W) zu erzeugen und seriell als PWM-Signal (PWM) auszugeben, wobei n größer oder gleich 2 ist, und die serielle Ausgabe des Datenwortes (W) mit der Zählrampe (C) synchronisiert ist, so dass ein vollständiges Datenwort (W) während einem Takt der Zählrampe (C) ausgegeben wird.

## Claims

**1.** Method for generating a PWM signal for driving the power transistors (T) of a half-bridge (B) of a converter (U) by means of a digital circuit (L, S), according to which method an internal reference value (Ref) is compared with a counter reading of a counter ramp (C), wherein a logic state of the PWM signal (PWM) is dependent on whether the internal reference value (Ref) is greater than the counter reading of the counter ramp (C), **characterized in that**, after every comparison between the internal reference value (Ref) and the counter reading, an n-bit-wide data word (W) which is dependent on the result of said comparison is generated and serially output as PWM signal (PWM), wherein n is greater than or equal to 2, and wherein the serial output of the data word (W) is synchronized with the counter ramp (C) such that a complete data word (W) is output during one clock cycle of the counter ramp (C).

**2.** Method according to Claim 1, **characterized in that** the data word (W) consists solely of bits of a first logic value if the counter reading is less than the internal reference value (Ref).

**3.** Method according to Claim 1 or 2, **characterized in that** the data word (W) consists solely of bits of a second logic value if the counter reading is greater than the internal reference value (Ref).

**4.** Method according to one of the preceding claims, **characterized in that** the internal reference value (Ref) is derived from an external reference value (Ref'), wherein the reference value (Ref) is the integer part of the quotient of the external reference value (Ref') and n.

**5.** Method according to Claim 4, **characterized in that**, in the case of the internal reference value (Ref) and the counter ramp (C) being identical, a data word (W) is serially output, the proportion of bits of the first and second logic values in said data word being dependent on a remainder (R) of the division of the external reference value (Ref') by n.

**6.** Method according to Claim 5, **characterized in that** the greater the remainder (R), the more bits of the first logic value the data word (W) comprises.

**7.** Method according to Claim 4 or 5, **characterized in that**, if the counter ramp (C) is traversed in an ascending manner, firstly all the bits of the first logic value in the data word (W) are serially output and only then are all the bits of the second logic value output.

**8.** Method according to Claim 4 or 5, **characterized in that**, if the counter ramp (C) is traversed in a descending manner, firstly all the bits of the second logic value in the data word (W) are serially output and only then are all the bits of the first logic value output.

**9.** Device for generating a PWM signal for driving the power transistors (T) of a half-bridge (B) of a converter (U) by means of a digital circuit (L, S), having means for comparing an internal reference value (Ref) with a counter reading of a counter ramp (C), wherein a logic state of the PWM signal (PWM) is dependent on whether the internal reference value (Ref) is greater than the counter reading of the counter ramp (C), **characterized in that** the device comprises a converter (S) which is designed to generate, after every comparison between the internal reference value (Ref) and the counter reading, an n-bit-wide data word (W) which is dependent on the result of said comparison and to serially output said data word as PWM signal (PWM), wherein n is greater than or equal to 2, and the serial output of the data word (W) is synchronized with the counter ramp (C) such that a complete data word (W) is output during one clock cycle of the counter ramp (C).

**Revendications**

1. Procédé pour générer un signal PWM pour commander les transistors de puissance (T) d'un demipont (B) d'un convertisseur d'énergie (U) au moyen d'un circuit numérique (L, S), d'après lequel une valeur de référence interne (Ref) est comparée avec une valeur comptée d'une rampe de comptage (C), un état logique du signal PWM (PWM) dépendant du fait que la valeur de référence interne (Ref) est supérieure ou non à la valeur comptée de la rampe de comptage (C), **caractérisé en ce qu'**après chaque comparaison entre la valeur de référence interne (Ref) et la valeur comptée, un mot de données (W) de n bits de large qui dépend du résultat de cette comparaison est généré puis délivré en série sous la forme d'un signal PWM (PWM), n étant supérieur ou égal à 2 et la délivrance en série du mot de données (W) étant synchronisée avec la rampe de comptage (C), de sorte qu'un mot de données (W) complet est délivré pendant un cycle de la rampe de comptage (C).

2. Procédé selon la revendication 1, **caractérisé en ce que** dans le cas où la valeur comptée est inférieure à la valeur de référence interne (Ref), le mot de données (W) se compose exclusivement de bits ayant une première valeur logique.

3. Procédé selon la revendication 1 ou 2, **caractérisé en ce que** dans le cas où la valeur comptée est supérieure à la valeur de référence interne (Ref), le mot de données (W) se compose exclusivement de bits ayant une deuxième valeur logique.

4. Procédé selon l'une des revendications précédentes, **caractérisé en ce que** la valeur de référence interne (Ref) est dérivée d'une valeur de référence externe (Ref'), la valeur de référence (Ref) étant la part entière du quotient de la valeur de référence externe (Ref') et de n.

5. Procédé selon la revendication 4, **caractérisé en ce qu'**en cas d'égalité de la valeur de référence interne (Ref) et de la rampe de comptage (C), un mot de données (W) est délivré en série dont les proportions de bits ayant la première et la deuxième valeur logique dépendent d'un reste (R) de la division de la valeur de référence externe (Ref') par n.

6. Procédé selon la revendication 5, **caractérisé en ce que** le mot de données (W) contient un nombre de bits ayant la première valeur logique qui est d'autant plus élevé que le reste (R) est grand.

7. Procédé selon la revendication 4 ou 5, **caractérisé en ce que** dans le cas où la rampe de comptage (C) est parcourue dans le sens croissant, tous les bits ayant la première valeur logique dans le mot de données (W) sont délivrés en série les premiers, et ensuite seulement tous les bits ayant la deuxième valeur logique.

8. Procédé selon la revendication 4 ou 5, **caractérisé en ce que** dans le cas où la rampe de comptage (C) est parcourue dans le sens décroissant, tous les bits ayant la deuxième valeur logique dans le mot de données (W) sont délivrés en série les premiers, et ensuite seulement tous les bits ayant la première valeur logique.

9. Dispositif pour générer un signal PWM pour commander les transistors de puissance (T) d'un demipont (B) d'un convertisseur d'énergie (U) au moyen d'un circuit numérique (L, S), comprenant des moyens pour comparer une valeur de référence interne (Ref) avec une valeur comptée d'une rampe de comptage (C), un état logique du signal PWM (PWM) dépendant du fait que la valeur de référence interne (Ref) est supérieure ou non à la valeur comptée de la rampe de comptage (C), **caractérisé en ce que** le dispositif présente un convertisseur (S) qui est conçu pour, après chaque comparaison entre la valeur de référence interne (Ref) et la valeur comptée, générer un mot de données (W) de n bits de large qui dépend du résultat de cette comparaison puis le délivrer en série sous la forme d'un signal PWM (PWM), n étant supérieur ou égal à 2 et la délivrance en série du mot de données (W) étant synchronisée avec la rampe de comptage (C), de sorte qu'un mot de données (W) complet est délivré pendant un cycle de la rampe de comptage (C).

FIG. 1

FIG. 2

FIG. 3

FIG. 4

FIG. 5

FIG. 6

| R [real] | R [bin] | W |
|----------|---------|---|
| 0.0000 | 0000 | 0000000000000000 |
| 0.0625 | 0001 | 1000000000000000 |
| 0.1250 | 0010 | 1100000000000000 |
| 0.1875 | 0011 | 1110000000000000 |
| 0.2500 | 0100 | 1111000000000000 |
| 0.3125 | 0101 | 1111100000000000 |
| 0.3750 | 0110 | 1111110000000000 |
| 0.4375 | 0111 | 1111111000000000 |
| 0.5000 | 1000 | 1111111100000000 |
| 0.5625 | 1001 | 1111111110000000 |
| 0.6250 | 1010 | 1111111111000000 |
| 0.6875 | 1011 | 1111111111100000 |
| 0.7500 | 1100 | 1111111111110000 |
| 0.8125 | 1101 | 1111111111111000 |
| 0.8750 | 1110 | 1111111111111100 |
| 0.9375 | 1111 | 1111111111111110 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005061388 A1
- EP 1014552 A1